# EUROPÄISCHE PATENTSCHRIFT

(11) **EP 1 350 887 B1**
(45) Veröffentlichungstag und Bekanntmachung des Hinweises auf die Patenterteilung: **16.05.2007**
(21) Anmeldenummer: 03002440.0
(22) Anmeldetag: 05.02.2003
(51) Int. Cl.: D21F 1/70, B01D 19/02

(54) **Vorrichtung zum Abtrennen von Luft aus Flotationsschaum**
Device for separating air from flotation foam
Dispositif pour la séparation de l'air de la mousse de flotation

(30) Priorität: 30.03.2002 DE 10214403
(43) Veröffentlichungstag der Anmeldung: 08.10.2003
(73) Patentinhaber: Voith Patent GmbH, 89522 Heidenheim (DE)
(72) Erfinder: Gaus, Gerhard, 88284 Wolpertswende (DE); Britz, Herbert, 88250 Weingarten (DE); Hess, Harald, 88287 Grünkraut (DE)

(56) Entgegenhaltungen:
- DE-A- 3 519 374
- DE-A- 4 009 042

## Beschreibung

Die Erfindung betrifft eine Vorrichtung gemäß dem Oberbegriff des Anspruchs 1.

Die Abtrennung von Luft aus Flotationsschaum, der bei der Flotation von Faserstoffsuspensionen, z.B. in der Altpapieraufbereitung, anfällt, ist u.a. deshalb erforderlich, um den Flotationsschaum weiterbehandeln zu können. Flotationsschaum, der bei der Flotation einer papierfaserhaltigen Suspension gebildet wird, ist bekanntlich besonders schwierig zu handhaben, da er schlecht zu entlüften oder zu entwässern ist. Ein solcher Flotationsschaum ist nur eingeschränkt fließ- und pumpfähig und neigt dazu, sich an den Wandungen festzusetzen.

Aus der DE 40 09 042 C2 ist eine Vorrichtung zur Abtrennung von Luft aus Flotationstrüben bekannt. Diese Vorrichtung besteht im Wesentlichen aus einem Hydrozyklon, der zwar zur Entlüftung von Flüssigkeiten und Schäumen gut geeignet ist, aber als hydraulische Maschine im geschlossenen System arbeitet, was entsprechende apparative Einrichtung erfordert und zumindest eine gewisse Fließfähigkeit des Schaumes voraussetzt.

Die DE 35 19 374 A1 beschreibt einen mechanischen Schaumzerstörer, der direkt in die obere Schaumschicht eingetaucht werden kann. Derartige mechanische Schaumzerstörer können z.B. in einem Schaumsammeltank einer Flotationsanlage eingesetzt werden. Die Schaumzerstörer erfassen nur die obere, stark lufthaltige Schaumschicht, saugen diese an und schleudern den Flüssigkeitsanteil radial weg, wobei die Flüssigkeitstropfen sekundär mithelfen, die Oberflächenschaumblasen zum Platzen zu bringen. Tiefere Schaumschichten werden von diesem System nicht erfasst. In den tieferen Schichten entsteht ein sehr schwerer, nasser Schaum, der keiner Zwangsentlüftung unterzogen wird. Die Entlüftung dieses nassen Schaumes geschieht nur durch Sedimentation, was langer Verweilzeiten bedarf. Diese Vorrichtung ist sowohl in ihrem konstruktiven Aufbau, dem erforderlichen Platzbedarf als auch bezüglich des Energieverbrauchs relativ aufwendig.

Der Erfindung liegt daher die Aufgabe zu Grunde, eine entsprechende Vorrichtung zu schaffen, mit der ohne großen Aufwand eine Abtrennung von Luft aus dem abfließenden Schaum ermöglicht wird.

Diese Aufgabe ist durch die im Kennzeichen des Anspruchs 1 genannten Merkmale gelöst.

Die erfindungsgemäße Vorrichtung stellt für ihre Funktion bezüglich der Beschaffenheit des Flotationsschaumes relativ wenig Ansprüche. Sie kann mit Vorteil an der Schaumsammelrinne einer Flotationsanlage eingesetzt werden, und zwar insbesondere an deren Abflussöffnung. Dort wird die horizontal, bzw. leicht schräg verlaufende Strömungsrichtung des Flotationsschaumes in eine nahezu senkrechte, abwärts führende umgelenkt. An dieser Stelle kann die Wand, die den Rotor der Vorrichtung umgibt, z.B. zylindrisch oder leicht konisch sein. Die Wirkung des Rotors besteht dann im Wesentlichen darin, den abfließenden Schaum in Rotation zu versetzen und/oder an die Wand zu schleudern, wodurch die Schaumblasen zerstört werden und die Luft nach innen wandert. Sie kann dann nach oben abströmen. Mit Vorteil wird der Rotor so angetrieben, dass die Flügel außen eine Umfangsgeschwindigkeit zwischen 4 und 12 m/s erreichen.

Mit besonderem Vorteil folgt der Abflussöffnung ein ca. 1 m langes senkrechtes zylindrisches Fallrohr, wobei die durch die Erfindung erzeugte Rotationsbewegung nicht nur den Vorteil einer Luftabtrennung bietet, sondern auch das Absetzen von Schaum in dem Fallrohr verhindert. Es kann auch von Vorteil sein, mit Hilfe von Strömungsbrechern die Rotationsbewegung im Fallrohr abzubremsen. Da der mit der erfindungsgemäßen Vorrichtung entlüftete Schaum direkt in eine Pumpe geführt werden kann, ist es möglich, ihn ohne weiteren Zwischenbehälter direkt in eine weitere Flotationsanlage, z.B. die Sekundärstufe, einzupumpen.

Die Erfindung und ihre Vorteile werden erläutert an Hand von Zeichnungen. Dabei zeigen:
- Fig. 1: eine schematische Darstellung der erfindungsgemäßen Vorrichtung, angebaut an eine Flotationszelle;
- Fig. 2 + 3: je eine Einbauvariante;
- Fig. 4 + 5: je eine weitere vorteilhafte Ausführungsform im Bereich der den Rotor umgebenden Wand;
- Fig. 6: Ansicht von oben auf eine erfindungsgemäße Vorrichtung in exzentrischer Anordnung.

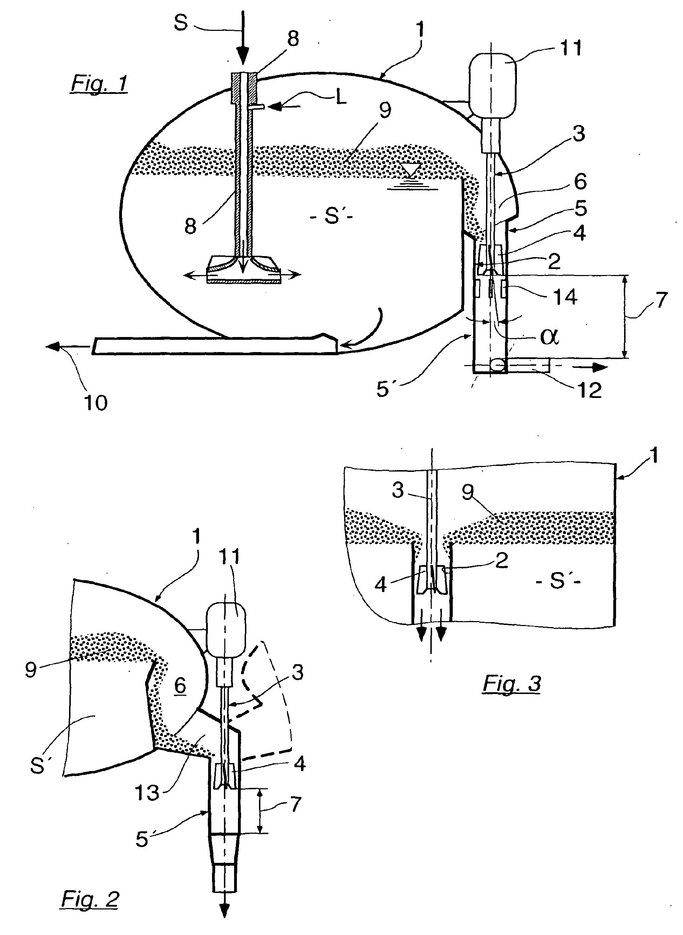

Die Fig. 1 zeigt in seitlich geschnittener Ansicht eine Flotationsvorrichtung 1. Diese enthält einen im Wesentlichen geschlossenen Behälter, der von oben durch eine Mischvorrichtung 8 mit der zu flotierenden papierfaserhaltigen Suspension S versorgt wird. In an sich bekannter Weise wird die Suspension S mit Luft L zu einer belüfteten Suspension S' vermischt, aus der innerhalb der Flotationsvorrichtung 1 die faserfremden, hydrophoben Bestandteile in den Flotationsschaum 9 aufsteigen. Der Gutstoff 10, der am Boden der Flotationsvorrichtung 1 abgezogen wird, enthält den überwiegenden Teil der Papierfasern und des Wassers.

Der Rotor der erfindungsgemäßen Vorrichtung weist eine Welle 3 auf, die mit vier Rotorflügeln 4 versehen ist und vom Antriebsmotor 11 in Rotation versetzt wird. Form und Anzahl der Rotorflügel können leicht auf eine gute Entlüftungswirkung optimiert werden. Die Rotorflügel 4 sind sehr einfach als ebene Blechflügel herzustellen, die dann - wie hier gezeichnet - in einem Winkel α von 10° relativ zur Wellenmittellinie angeschweißt werden. Der Rotor ist an der Stelle, an der sich die Rotorflügel 4 befinden, hier von einer rotationssymmetrischen, konzentrischen Wand 2 umgeben, die gleichzeitig Teil der Abflussleitung 5 ist. Diese Anordnung ist für viele Fälle optimal. Es sind aber auch andere Anordnungen möglich. In der Abflussleitung 5 können sich Strömungsbrecher 14, z.B. in Form von radialen Blechstreifen, befinden, die die Rotationsströmung des ablaufenden Schaumes bremsen. Sie können auch schräg gestellt sein, so dass sie die Umfangsbewegung in eine nach unten führende Strömung umwandeln. Die Abflussleitung 5 endet hier in einem Tangentialablauf 12. Zwischen den Rotorflügeln 4 und dem Tangentialablauf 12 befindet sich eine Fallstrecke, deren Länge 7 größer ist als 0,5 m, vorzugsweise mindestens 1 m. Dadurch lassen sich gute Abströmbedingungen für den Flotationsschaum schaffen. Anstelle des Tangentialablaufes kann die Abflussleitung 5 auch eine konische Verengung am Ende der Fallstrecke haben (s. Fig. 2). Mit Vorteil ist die Abflussleitung 5 oben so mit dem übrigen Teil der Flotationsvorrichtung 1 verbunden, dass die durch den Rotor und die Rotorflügel ausgetriebene Luft nicht nach außen entweicht, sondern direkt wieder in die Mischvorrichtung 8 gelangen kann.

In vielen Fällen wird der Gutstoff 10 erneut einem anderen Teil der Flotationsvorrichtung 1 oder einer weiteren Flotationsvorrichtung zugeführt, so lange, bis die Reinigung so weit erfolgt ist, dass der Gutstoff weiterverarbeitet werden kann. Oft werden verschiedene Teile der Flotationsvorrichtung als Zellen ausgebildet, die von der Suspension nacheinander durchströmt werden. Wenn solche Zellen nebeneinander angeordnet sind, können sie eine gemeinsame Schaumsammelrinne 6 haben, in die der Flotationsschaum 9 abfließt, gesammelt und dann durch die Abflussleitung 5 abgezogen wird.

Fig. 2 zeigt eine etwas andere Ausgestaltung des Schaumabflusses aus der Flotationsvorrichtung 1. Bei dieser Lösung wird durch einen Kanal 13 der Flotationsschaum 9 aus der Schaumsammelrinne 6 seitlich herausgeführt. Dadurch kann der Bereich der Rotorflügel 4 leichter zugänglich gestaltet werden, und der Antriebsmotor 11 lässt sich leichter anbringen. Bei nebeneinander liegenden Schaumsammelrinnen können auch zwei solcher Kanäle einer einzigen Entlüftungsvorrichtung zugeordnet werden (zweiter Kanal gestrichelt angedeutet). In anderen Ausführungsformen kann die Vorrichtung direkt am Schaumüberlaufbereich einer Flotationsvorrichtung positioniert sein. Das ist dort, wo der Flotationsschaum 9 abfließt und so von der darunter liegenden Suspension S' getrennt wird. So zeigt die Fig. 3 ein Beispiel mit einer Flotationszelle, deren Schaum im Zentrum nach unten abläuft. An dieser Stelle befindet sich dann der Rotor mit der ihn umgebenden Wand 2.

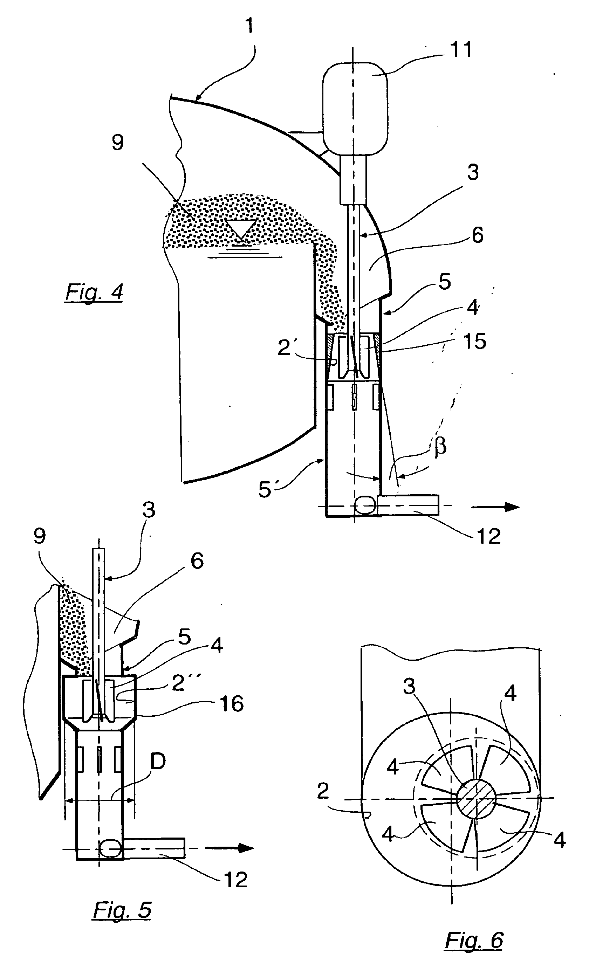

Die Form der den Rotorflügel 4 umgebenden Wand 2 kann auch von dem bisher dargestellten Zylinder abweichen. So ist in Fig. 4 ein Einsatz 15 gezeigt, dessen Wand 2' kegelstumpfförmig ist mit einer Querschnittserweiterung in Schaumabflussrichtung. Der Konuswinkel β gegenüber der Achsrichtung kann zwischen 1° und 5°, vorzugsweise 2° betragen. Durch die Maßnahme werden Entlüftung und Abfluss des Flotationsschaumes weiter verbessert. Ähnlich günstige Wirkung hat auch eine Schleuderkammer 16 im Bereich der Rotorflügel, die in Fig. 5 dargestellt ist. Die so gebildete Wand 2" ist hier zylindrisch, und ihr größter Durchmesser D ist 1,2 Mal bis 3 Mal so groß wie der Außendurchmesser der Rotorflügel 4.

In Fig. 6 ist eine exzentrische Anordnung des Rotors 1 in der Abflussleitung 5 gezeigt. Dabei wird der Rotor an der Stelle plaziert, an der der Schaum auf Grund der Schrägstellung der Schaumsammelrinne und auf Grund der Rotordrehrichtung abfließt.

## Patentansprüche

1. Vorrichtung zur Entfernung von Luft aus bei der Flotation einer papierfaserhaltigen Suspension (S) gebildetem Flotationsschaum (9), welche einen angetriebenen Rotor enthält,
**dadurch gekennzeichnet,**
**dass** der Rotor eine Welle (3) aufweist, auf deren Umfang sich mindestens ein Rotorflügel (4) befindet und dass der Rotor im Bereich des Rotorflügels (4) von einer nicht rotierenden Wand (2, 2', 2") umgeben ist.

2. Vorrichtung nach Anspruch 1,
**dadurch gekennzeichnet,**
**dass** die Wand (2, 2', 2") rotationssymmetrisch ist.

3. Vorrichtung nach Anspruch 2,
**dadurch gekennzeichnet,**
**dass** die Wand (2, 2', 2") konzentrisch mit dem Rotor ist.

4. Vorrichtung nach Anspruch 1,
**dadurch gekennzeichnet,**
**dass** die Wand (2,2', 2") nicht konzentrisch mit dem Rotor ist.

5. Vorrichtung nach Anspruch 1, 2, 3 oder 4,
**dadurch gekennzeichnet,**
**dass** der kleinste Abstand zwischen Rotorflügeln (4) und Wand (2, 2', 2") einen Wert zwischen 10 mm und dem des Außendurchmessers der Rotorflügel (4) hat.

6. Vorrichtung nach Anspruch 1, 2, 3 oder 4,
**dadurch gekennzeichnet,**
**dass** die Wand (2") rotationssymmetrisch ist und einen maximalen Durchmesser (D) hat, der das 1,2- bis 3-Fache des Außendurchmessers der Rotorflügel (4) hat.

7. Vorrichtung nach Anspruch 1, 2, 3, 4, 5 oder 6,
**dadurch gekennzeichnet,**
**dass** die Wand (2') die Form eines Kegelstumpfes hat, der sich in Abflussrichtung des Flotationsschaumes (9) erweitert.

8. Vorrichtung nach Anspruch 7,
**dadurch gekennzeichnet,**
**dass** der Konuswinkel (β) des Kegelstumpfes gegenüber der Achsrichtung 1° bis 5°, vorzugsweise 2° beträgt.

9. Vorrichtung nach einem der voranstehenden Ansprüche,
**dadurch gekennzeichnet,**
**dass** die Welle (3) des Rotors senkrecht steht.

10. Vorrichtung nach Anspruch 8,
**dadurch gekennzeichnet,**
**dass** für die Abführung der Luft eine nach oben führende zentrische Steigleitung vorhanden ist.

11. Vorrichtung nach einem der voranstehenden Ansprüche,
**dadurch gekennzeichnet,**
das die den Rotor umgebende Wand (2) der obere Teil der Abflussleitung (5) des Schaumüberlaufbereiches einer Flotationsvorrichtung (1) ist.

12. Vorrichtung nach einem der Ansprüche 1 bis 10,
**dadurch gekennzeichnet,**
**dass** die den Rotor umgebende Wand (2) der obere Teil der Abflussleitung (5) des Schaumsammelbereiches einer Flotationsvorrichtung (1) ist.

13. Vorrichtung nach einem der Ansprüche 1 bis 10,
**dadurch gekennzeichnet,**
**dass** die den Rotor umgebende Wand (2) der obere Teil der Abflussleitung (5) der Schaumsammelrinne (6) einer Flotationsvorrichtung (1) ist.

14. Vorrichtung nach einem der Ansprüche 8 bis 13,
**dadurch gekennzeichnet,**
**dass** die Vorrichtung nach oben offen ist.

15. Vorrichtung nach einem der Ansprüche 8 bis 14,
**dadurch gekennzeichnet,**
**dass** sich die Wand (2) unterhalb des Rotors in einer senkrechten zylindrischen Abflussleitung (5) fortsetzt, deren Länge (7) mindestens 0,5 m, vorzugsweise 1 m beträgt.

16. Vorrichtung nach einem der Ansprüche 8 bis 14,
**dadurch gekennzeichnet,**
**dass** sich die Wand (2) unterhalb des Rotors in einer senkrechten zylindrischen Abflussleitung (5') fortsetzt, deren Länge (7) mindestens so groß ist wie der Innendurchmesser dieser Abflussleitung.

17. Vorrichtung nach Anspruch 15 oder 16,
**dadurch gekennzeichnet,**
**dass** sich am unteren Ende der Rohrleitung ein Tangentialablauf (12) befindet.

18. Vorrichtung nach einem der Ansprüche 15 bis 17,
**dadurch gekennzeichnet,**
**dass** in der senkrechten Rohrleitung Strömungsbrecher (14) angeordnet sind, die die Rotationsströmung des abfließenden Schaumes abbremsen oder ganz verhindern.

19. Vorrichtung nach Anspruch 18,
**dadurch gekennzeichnet,**
**dass** die Strömungsbrecher (14) die Rotationsströmung des Schaumes in eine nach unten gerichtete Strömung umlenken.

20. Vorrichtung nach einem der voranstehenden Ansprüche,
**dadurch gekennzeichnet,**
**dass** die Rotorflügel (4) sowohl einen Umtrieb in Umfangsrichtung, als auch einen Vortrieb in axialer Richtung bewirken.

21. Vorrichtung nach einem der voranstehenden Ansprüche,
**dadurch gekennzeichnet,**
**dass** die Rotorflügel (4) als auf die Welle (3) aufgeschweißte ebene Blechflügel ausgebildet sind.

22. Vorrichtung nach Anspruch 21,
**dadurch gekennzeichnet,**
**dass** die Blechflügel gegenüber der Mitte der Welle (3) in einem Winkel (α) zwischen 3° und 45° geneigt sind.

23. Vorrichtung nach einem der Ansprüche 1 bis 20,
**dadurch gekennzeichnet,**
**dass** die Rotorflügel (4) eine gewölbte Form haben.

24. Vorrichtung nach einem der voranstehenden Ansprüche,
**dadurch gekennzeichnet,**
**dass** die Rotorflügel (4) gehärtet sind.

25. Vorrichtung nach einem der voranstehenden Ansprüche,
**dadurch gekennzeichnet,**
**dass** die Wand (2, 2', 2") im Arbeitsbereich der Rotorflügel (4) gehärtet ist.

## Claims

1. Device for removing air from a flotation foam (9) formed in the flotation of a pulp-containing suspension (S), which contains a driven rotor, **characterised in that** the rotor has a shaft (3) on whose circumference at least one rotor blade (4) is disposed and **in that** the rotor is surrounded in the region of the rotor blade (4) by a non-rotating wall (2, 2', 2").

2. Device according to claim 1, **characterised in that** the wall (2, 2', 2") is rotationally symmetrical.

3. Device according to claim 2, **characterised in that** the wall (2, 2', 2") is concentric with the rotor.

4. Device according to claim 1, **characterised in that** the wall (2, 2', 2") is not concentric with the rotor.

5. Device according to claim 1, 2, 3 or 4, **characterised in that** the shortest distance between the rotor blades (4) and the wall (2, 2', 2") has a value of between 10 mm and that of the outer diameter of the rotor blades (4).

6. Device according to claim 1, 2, 3 or 4, **characterised in that** the wall (2") is rotationally symmetrical and has a maximum diameter (D) which is 1.2 to 3 times the outer diameter of the rotor blades (4).

7. Device according to claim 1, 2, 3, 4, 5 or 6, **characterised in that** the wall (2') has the shape of a truncated cone which expands in the drainage direction of the flotation foam (9).

8. Device according to claim 7, **characterised in that** the cone angle (β) of the truncated cone with respect to the axial direction is 1° to 5°, preferably 2°.

9. Device according to one of the preceding claims, **characterised in that** the shaft (3) of the rotor is vertical.

10. Device according to claim 8, **characterised in that** for discharging the air, an upward-leading central riser is provided.

11. Device according to one of the preceding claims, **characterised in that** the wall (2) surrounding the rotor is the upper part of the drain (5) of the foam overflow region of a flotation device (1).

12. Device according to one of claims 1 to 10, **characterised in that** the wall (2) surrounding the rotor (2) is the upper part of the drain (5) of the foam collecting region of a flotation device (1).

13. Device according to one of claims 1 to 10, **characterised in that** the wall (2) surrounding the rotor is the upper part of the drain (5) of the foam collecting pipe (6) of a flotation device (1).

14. Device according to one of claims 8 to 13, **characterised in that** the device is open at the top.

15. Device according to one of claims 8 to 14, **characterised in that** the wall (2) is continued below the rotor in a vertical, cylindrical drain (5), whose length (7) is at least 0.5 m, preferably 1 m.

16. Device according to one of claims 8 to 14, **characterised in that** the wall (2) is continued below the rotor in a vertical cylindrical drain (5'), whose length (7) is at least as great as the inner diameter of this drain.

17. Device according to claim 15 to 16, **characterised in that** at the lower end of the conduit a tangential outlet (12) is provided.

18. Device according to one of claims 15 to 17, **characterised in that** in the vertical conduit, flow baffles (14) are disposed, which slow down or completely prevent the swirling flow of the effluent foam.

19. Device according to claim 18, **characterised in that** the flow baffles (14) deflect the swirling flow of the foam in a downward direction.

20. Device according to one of the preceding claims, **characterised in that** the rotor blades (4) effect both a circular thrust in the circumferential direction and forward thrust in the axial direction.

21. Device according to one of the preceding claims, **characterised in that** the rotor blades (4) are formed as plane, sheet-metal blades welded on to the shaft (3).

22. Device according to claim 21, **characterised in that** the sheet-metal blades are inclined with respect to the centre of the shaft (3) at an angle (α) of between 3° and 45°.

23. Device according to one of claims 1 to 20, **characterised in that** the rotor blades (4) have a cambered form.

24. Device according to one of the preceding claims, **characterised in that** the rotor blades (4) are hardened.

25. Device according to one of the preceding claims, **characterised in that** the wall (2, 2', 2") in the working region of the rotor blades (4) is hardened.

## Revendications

1. Dispositif de séparation d'air de la mousse de flottation (9) engendrée lors de la flottation d'une suspension (S) contenant des fibres de papier, lequel dispositif comporte un rotor entraîné,
**caractérisé en ce que**
le rotor est doté d'un arbre (3), sur la périphérie duquel est prévue au moins une pale de rotor (4), et **en ce que** dans la zone de la pale de rotor (4), le rotor est entouré d'une paroi (2, 2', 2") non rotative.

2. Dispositif selon la revendication 1,
**caractérisé en ce que**
la paroi (2, 2', 2") est à symétrie de révolution,

3. Dispositif selon la revendication 2,
**caractérisé en ce que**
la paroi (2, 2', 2") est concentrique par rapport au rotor.

4. Dispositif selon la revendication 1,
**caractérisé en ce que**
la paroi (2, 2', 2") n'est pas concentrique par rapport au rotor.

5. Dispositif selon la revendication 1, 2, 3 ou 4,
**caractérisé en ce que**
l'écartement le plus faible entre les pales de rotor (4) et la paroi (2, 2', 2") se situe à une valeur comprise entre 10 mm et le diamètre extérieur des pales de rotor (4).

6. Dispositif selon la revendication 1, 2, 3 ou 4,
**caractérisé en ce que**
la paroi (2") est à symétrie de révolution et possède un diamètre maximal (D) qui est égal à 1,2 à 3 fois le diamètre extérieur des pales de rotor (4).

7. Dispositif selon la revendication 1, 2, 3, 4, 5 ou 6,
**caractérisé en ce que**
la paroi (2') a la forme d'un cône tronqué qui s'élargit dans le sens de l'écoulement de la mousse de flottation (9),

8. Dispositif selon la revendication 7,
**caractérisé en ce que**
l'angle (β) du cône tronqué par rapport à la direction axiale est de 1° à 5° de préférence de 2°.

9. Dispositif selon l'une des revendications précédentes,
**caractérisé en ce que**
l'arbre (3) du rotor est positionné à la verticale.

10. Dispositif selon la revendication 8,
**caractérisé en ce que**
une conduite ascendante centrée menant vers le haut est prévue pour l'évacuation de l'air.

11. Dispositif selon l'une des revendications précédentes,
**caractérisé en ce que**
la paroi (2) entourant le rotor est la partie supérieure de la conduite d'évacuation (5) de la zone de trop-plein de mousse d'un dispositif de flottation (1).

12. Dispositif selon l'une des revendications 1 à 10,
**caractérisé en ce que**
la paroi (2) entourant le rotor est la partie supérieure de la conduite d'évacuation (5) de la zone de collecte de mousse d'un dispositif de flottation (1).

13. Dispositif selon l'une des revendications 1 à 10,
**caractérisé en ce que**
la paroi (2) entourant le rotor est la partie supérieure de la conduite d'évacuation (5) de la goulotte collectrice de mousse (6) d'un dispositif de flottation (1).

14. Dispositif selon l'une des revendications 8 à 13,
**caractérisé en ce que**
le dispositif est ouvert vers le haut.

15. Dispositif selon l'une des revendications a à 14,
**caractérisé en ce que**
la paroi (2) se prolonge sous le rotor par une conduite d'évacuation (5) verticale cylindrique, dont la longueur (7) est au moins de 0,5 m, de préférence de 1 m,

16. Dispositif selon l'une des revendications 8 à 14,
**caractérisé en ce que**
la paroi (2) se prolonge sous le rotor par une conduite d'évacuation (5') verticale cylindrique, dont la longueur (7) est au moins aussi importante que le diamètre intérieur de cette conduite d'évacuation.

17. Dispositif selon la revendication 15 ou 16,
**caractérisé en ce que**
un écoulement tangentiel (12) est situé sur l'extrémité inférieure de la tuyauterie.

18. Dispositif selon l'une des revendications 15 à 17,
**caractérisé en ce que**
des briseurs d'écoulement (14) sont agencés dans la tuyauterie verticale, qui freinent ou empêchent totalement le courant rotationnel de la mousse s'écoulant.

19. Dispositif selon la revendication 18,
**caractérisé en ce que**
les briseurs d'écoulement (14) dévient le courant rotationnel de la mousse en un courant orienté vers le bas.

20. Dispositif selon l'une des revendications précédentes,
**caractérisé en ce que**
les pales de rotor (4) provoquent aussi bien une circulation dans la direction périphérique qu'une avance dans la direction axiale.

21. Dispositif selon l'une des revendications précédentes,
**caractérisé en ce que**
les pales de rotor (4) sont réalisées sous la forme de pales planes en tôle soudées sur l'arbre (3).

22. Dispositif selon la revendication 21,
**caractérisé en ce que**
les pales en tôle sont inclinées suivant un angle (α) compris entre 3° et 45° par rapport au centre de l'arbre (3).

23. Dispositif selon l'une des revendications 1 à 20,
**caractérisé en ce que**
les pales de rotor (4) ont une forme cintrée.

24. Dispositif selon l'une des revendications précédentes,
**caractérisé en ce que**
les pales de rotor (4) sont trempées.

25. Dispositif selon l'une des revendications précédentes,
**caractérisé en ce que**
la paroi (2, 2', 2") est trempée dans la zone de travail des pales de rotor (4).
